# EUROPÄISCHE PATENTANMELDUNG

(11) **EP 1 582 410 A2**
(43) Veröffentlichungstag der Anmeldung: **05.10.2005**
(21) Anmeldenummer: 05102206.9
(22) Anmeldetag: 21.03.2005
(51) Int. Cl.: B60R 11/02

(54) **KFZ-Halterung für Mobilfunkgeräte**

(30) Priorität: 31.03.2004 DE 102004015846
(71) Anmelder: SIEMENS AKTIENGESELLSCHAFT, 80333 München (DE)
(72) Erfinder: Lange, Thorsten, 87719 Mindelheim (DE)

(57) **Zusammenfassung**

Die vorliegende Erfindung betrifft eine KFZ-Halterung für Mobilfunkgeräte, bei der das Mobilfunkgerät in einen Aufnahmeschacht einführbar ist, der um eine Achse nach vorne schwenkbar ist. Um die KFZ-Halterung für Mobilfunkgeräte unterschiedlicher Breite verwenden zu können, ist in dem Aufnahmeschacht ein Führungsteil vorgesehen, welches in seinem oberen Bereich aus einem nach vorne offenen U-förmigen Bügel besteht, an dessen beiden Seitenteilen nach unten gerichtete und leicht nach innen weisende Laschen angeordnet sind, welche über jeweils zwei parallel zueinander verlaufende Biegekanten mit dem Bügel verbunden sind.

## Beschreibung

Die vorliegende Erfindung betrifft eine KFZ-Halterung für Mobilfunkgeräte mit einer mehrpoligen Steckaufnahme im Bodenteil und einer Koaxsteckaufnahme im oberen Rückwandbereich, bei der das Mobilfunkgerät in einen Aufnahmeschacht einführbar ist, der in seinem Bodenteil einen der Steckaufnahmen des Mobilfunkgerätes entsprechenden Stecker aufweist und zur Einführung des Mobilfunkgerätes um eine Achse nach vorne schwenkbar ist.

Mobilfunkgeräte werden im allgemeinen durch eine Reihe von Zubehörkomponenten zu nützlichen Systemen erweitert, die einerseits eine Funktionserweiterung des Gerätes darstellen, andererseits grundsätzlich für ihren Betrieb notwendig sind.

Eine zentrale Zubehörkomponente für die Verwendung von Mobilfunkgeräten im Kraftfahrzeug ist eine KFZ-Halterung für das Mobilfunkgerät, welche das Mobilfunkgerät zum einen sicher mechanisch mit dem Kraftfahrzeug verbindet und zum anderen für alle notwendigen Lade- und/oder Hochfrequenz- und/oder Niederfrequenz-Verbindungen sorgt.

Ein wesentlicher Nachteil von KFZ-Halterungen der eingangs genannten Art besteht darin, dass die einzelnen KFZ-Halterungen jeweils nur für einen bestimmten Mobilfunkgerätetyp ausgebildet sind, so dass eine Vielzahl von KFZ-Halterungen angeboten werden muss.

Aufgabe der vorliegenden Erfindung ist es daher, eine KFZ-Halterung der eingangs genannten Art anzugeben, welche für unterschiedliche Gerätebreiten von Mobilfunkgeräten ausgelegt ist.

Die Lösung dieser Aufgabe ist für die oben genannte KFZ-Halterung dadurch gekennzeichnet, dass in dem Aufnahmeschacht ein Führungsteil vorgesehen ist, welches in seinem oberen Bereich aus einem nach vorne offenen, U-förmigen Bügel besteht, an dessen beiden Seitenteilen nach unten gerichtete und leicht nach innen weisende Laschen angeordnet sind, welche über jeweils zwei parallel zueinander verlaufende Biegekanten mit dem Bügel verbunden sind.

Durch die beweglichen Laschen des Führungsteils welche bei Einführung eines Mobilfunkgerätes unterschiedliche Abstände bei gleichzeitiger paralleler Führung einnehmen können, besteht die Möglichkeit, eine KFZ-Halterung für verschiedene Gerätebreiten von Mobilfunkgeräten zu verwenden.

Weitere zweckmäßige Weiterbildungen sowie Ausgestaltungen der erfindungsgemäßen KFZ-Halterung ergeben sich aus den Unteransprüchen sowie aus der nachfolgenden Beschreibung eines Ausführungsbeispiels einer erfindungsgemäßen KFZ-Halterung anhand der beigefügten Zeichnung.

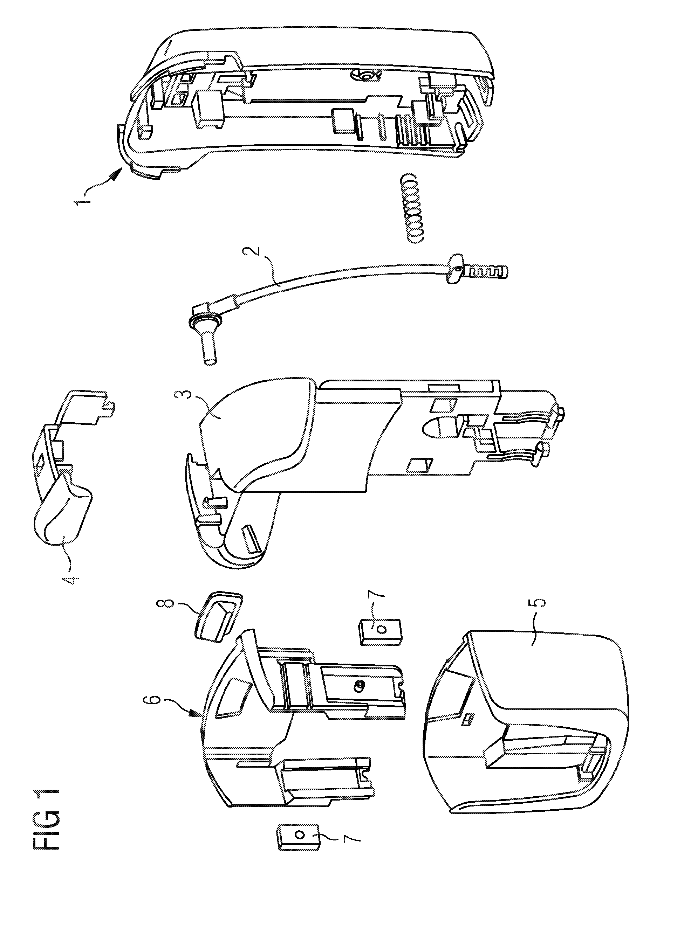

In der Zeichnung zeigen
Figur 1 eine perspektivische Explosionsdarstellung einer erfindungsgemäßen KFZ-Halterung, und
Figur 2 eine perspektivische Detailansicht des Führungsteils.

Die erfindungsgemäße KFZ-Halterung zur Aufnahme eines Mobilfunkgerätes besteht im wesentlichen aus einem Basis-Unterteil 1, einer HF-Zuführung 2, einem Basis-Oberteil 3 mit einer Verriegelungseinheit 4, einem Aufnahmeschacht 5 sowie dem Führungsteil 6.

Der Aufnahmeschacht 5 ist als schwenkbares separates Teil ausgebildet, um das Mobilfunkgerät einführen zu können. Nach der Einführung des Mobilfunkgerätes in den Aufnahmeschacht 5 wird das Mobilfunkgerät mit dem Aufnahmeschacht zusammen in seine endgültige senkrechte Lage geschwenkt, in welcher dann auch die Verbindung zwischen Mobilfunkgerät und HF-Zuführung 2 erfolgt.

In dem Aufnahmeschacht 5 ist erfindungsgemäß ein Führungsteil 6 angeordnet. Im Bodenbereich des Aufnahmeschachts 5 befindet sich ein Stecker, welcher mit der Steckaufnahme des eingeführten Mobilfunkgerätes elektrisch zu verbinden ist.

Das Führungsteil 6 besteht im wesentlichen aus einem oberen Bereich, welcher als ein nach vorne offener, U-förmiger Bügel 13 ausgebildet ist.

An den beiden Seitenteilen des Bügels 13 befinden sich nach unten gerichtete und leicht nach innen weisende Laschen 9, welche über jeweils zwei parallel zueinander und quer zur Längsrichtung der Laschen verlaufende Biegekanten 11 und 12 mit dem Bügel 13 verbunden sind.

Die Biegekanten werden durch eine von vorne nach hinten verlaufende durchgehende Verringerung der Materialdichte erreicht.

Durch die zwei Biegekanten 11, 12 wird erreicht, dass Mobilfunkgeräte unterschiedlicher Breite in das Führungsteil 6 eingeschoben werden können und sich die Laschen 9 parallel zueinander auf unterschiedliche Breiten einstellen. Diese Parallelführung wird durch die nach innen gerichtete Vorspannung der beiden Laschen 9 und durch die zwei parallelen Biegekanten ermöglicht.

Um einen festen Sitz des eingeschobenen Mobilfunkgeräts zu erreichen, können zwischen den Laschen 9 und den Seitenwänden des Aufnahmeschachts 5 seitliche Abstandshalter 7, welche aus einem elastischen Material bestehen, vorgesehen werden.

Der Querschnitt der Laschen ist derart ausgebildet, dass die Innenfläche der Lasche den Seitenflächen der aufzunehmenden Mobilfunkgeräte angepasst ist.

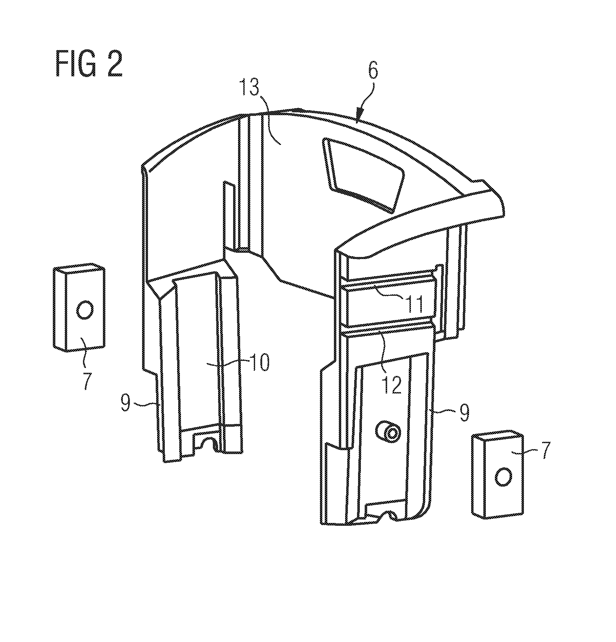

Dies ist in Figur 2 bei der linken Lasche deutlich zu erkennen.

Darüber hinaus kann die Innenseite der Lasche 9 mit einer Nut 10 versehen werden, so dass auch schmalere Mobilfunkgeräte in das Führungsteil 6 eingeführt werden können und dort sicher gehalten werden.

Um einen sicheren Halt des eingeschobenen Mobilfunkgeräts nach hinten, bzw. nach vorne zu erreichen, kann ein Puffer 8 vorgesehen werden.

### Bezugszeichenliste

- 1: Basis-Unterteil
- 2: HF-Zuführung
- 3: Basis-Oberteil
- 4: Verriegelungseinheit
- 5: Aufnahmeschacht
- 6: Führungsteil
- 7: seitliche Abstandshalter
- 8: Puffer
- 9: Laschen
- 10: Nut
- 11: obere Biegekante
- 12: untere Biegekante
- 13: Bügel

## Patentansprüche

1. KFZ-Halterung für Mobilfunkgeräte mit einer mehrpoligen Steckaufnahme im Bodenteil und einer Koaxsteckaufnahme im oberen Rückwandbereich, bei der das Mobilfunkgerät in einen Aufnahmeschacht einführbar ist, der an seinem Bodenteil einen der Steckaufnahme des Mobilfunkgeräts entsprechenden Stecker aufweist und zur Einführung des Mobilfunkgerätes um eine Achse nach vorne schwenkbar ist, **dadurch gekennzeichnet, dass** in dem Aufnahmeschacht (5) ein Führungsteil (6) vorgesehen ist, welches in seinem oberen Bereich aus einem nach vorne offenen U-förmigen Bügel (13) besteht, an dessen beiden Seitenteilen nach unten gerichtete und leicht nach innen weisende Laschen (9) angeordnet sind, welche über jeweils zwei parallel zueinander verlaufende Biegekanten (11, 12) mit dem Bügel (13) verbunden sind.

2. KFZ-Halterung nach Anspruch 1, **dadurch gekennzeichnet, dass** zwischen den Laschen (9) und den Seitenteilen des Aufnahmeschachts elastische Abstandshalter (7) angebracht sind.

3. KFZ-Halterung nach Anspruch 1 oder 2, **dadurch gekennzeichnet, dass** die Innenflächen der Laschen den Seitenflächen von aufzunehmenden Mobilfunkgeräten angepasst sind.

4. KFZ-Halterung nach Anspruch 3, **dadurch gekennzeichnet, dass** die Innenflächen der Laschen zusätzlich eine in Längsrichtung der Laschen verlaufende Nut aufweisen.

5. KFZ-Halterung nach einem der Ansprüche 1 bis 4, **dadurch gekennzeichnet, dass** die Biegekanten durch eine Verringerung der Materialdichte ausgebildet sind.
